# EUROPEAN PATENT APPLICATION

(11) **EP 4 407 811 A1**
(43) Date of publication of application: **31.07.2024**
(21) Application number: 22897358.2
(22) Date of filing: 26.09.2022
(51) Int. Cl.: H01R 13/52

(54) **FIRST CONNECTOR, BATTERY, CONNECTOR ASSEMBLY, AND ELECTRICAL DEVICE**

(30) Priority: 29.11.2021 CN 202122975220 U
(71) Applicant: Contemporary Amperex Technology Co., Limited, Ningde, Fujian 352100 (CN)
(72) Inventor: HE, Jia, Ningde, Fujian 352100 (CN); WANG, Yu, Ningde, Fujian 352100 (CN); ZHENG, Chenling, Ningde, Fujian 352100 (CN)
(74) Representative: Ziebig Hengelhaupt Intellectual Property Attorneys Patentanwaltskanzlei PartGmbB
(86) International application number: PCT/CN2022/121434
(87) International publication number: WO 2023/093272

(57) **Abstract**

The present application discloses a first connector, a battery, a connector assembly and an electric device. The first connector is used for cooperating with at least one second connector in an insertion way. The first connector includes a first connector body and at least one protective cover. The first connector body has an opening for allowing the at least one second connector to be inserted thereinto. The at least one protective cover each is movably mounted on the first connector body and is used to cover the opening. In the above, the at least one protective cover is configured to be pushed by the at least one second connector to open the opening, when the second connector is inserted into and connected with the first connector. The technical solution provided by the present application can solve the problem in the prior art that the connector, when not connected, is exposed to the outside and is easy to be contaminated.

## Description

### Cross Reference to Related Applications

The present application claims the priority to Chinese patent application 202122975220.4, filed on November 29, 2021, and entitled "First Connector, Battery, Connector Assembly and Electric Device", the entire contents of which are incorporated by reference herein.

### Technical Field

The present application relates to the technical field of connectors, and in particular, to a first connector, a battery, a connector assembly and an electric device.

### Background Art

Energy conservation and emission reduction are keys to the sustainable development of the automobile industry, and electric vehicles have become an important part of the sustainable development of the automobile industry, due to their advantages in energy conservation and environmental protection. In order to improve the cruising range of electric vehicles, technicians have proposed two solutions: fast charging and quick replacing. The quick-replacing solution includes supplementing electrical energy by replacing a low-power battery with a full-power battery.

For the quick-replacing solution, a connector is required, as a battery replacement interface, for connection between the battery and the vehicle body. However, in the prior art, when the battery is not connected with the vehicle body, the connector is exposed to the outside and easy to be contaminated by contaminants in the air, reducing safety.

### Summary

The present application provides a first connector, a battery, a connector assembly and an electric device, which can solve the problem in the prior art that the connector, when not connected, is exposed to the outside and easy to be contaminated.

In a first aspect, the present application provides a first connector configured for being connected with and cooperating with at least one second connector in an insertion way, including: a first connector body having an opening for allowing the at least one second connector to be inserted thereinto, and at least one protective cover movably installed on the first connector body and configured for covering the opening, wherein the at least one protective cover each is configured for being pushed, when the corresponding second connecter is inserted into and connected with the first connector, by the corresponding second connector to open the opening.

In the technical solution of the embodiment of the present application, the first connector and the at least one second connector are used in the quick-replacing solution of the battery and an electric device body. When the second connector is not inserted into and connected with the first connector, the protective cover covers the opening of the first connector body to prevent external contaminants from entering the first connector body to affect the performance thereof, which causes occurrence of situation that the first connector body is damaged and has reduced safety. When the second connector is inserted into and connected with the first connector, the protective cover is pushed along with the insertion action of the second connector, so as to open and expose the opening for insertion of the second connector, to realize cooperation between the first connector and the second connector. Since the opening of the first connector body is opened when the at least one second connector is inserted thereinto, it can effectively prevent external contaminants from entering the opening which causes occurrence of situation that the first connector is damaged and has reduced safety, thereby ensuring normal working of the battery and the electric device. Meanwhile, compared with the situation that the first connector body is protected by controlling a control system to control the protective cover to move, with the control system including the distance measuring sensor module, the motor control system and the pressure sensor module, the protective cover can be movably provided on the first connector body and realize protection of the first connector body through pushing of the second connector, enabling the advantages of simple structure, and low manufacturing and operating costs.

In an optional embodiment, the protective cover is rotatably mounted on the first connector body, and the protective cover is configured to be pushed, when the second connector is inserted into and connected with the first connector, by the second connector to rotate to open the opening, and the rotation axis of the protective cover is perpendicular to the insertion direction of the second connector.

When being pushed by the second connector, the protective cover can rotate quickly to open the opening for allowing the second connector to be inserted into the opening. By setting the rotation axis of the protective cover to be perpendicular to the insertion direction of the second connector, the protective cover does not interfere with the insertion of the second connector when rotating, ensuring that the second connector can be smoothly inserted into the opening.

In an optional embodiment, the first connector body includes an end surface and an outer peripheral surface, the opening is arranged on the end surface, the outer peripheral surface surrounds the end surface, and when the protective cover covers the opening, one end of the protective cover protrudes from the outer peripheral surface of the first connector body, to be pushed and rotated by the second connector.

The end of the protective cover is provided to protrude from the outer peripheral surface of the first connector body, enabling that the part protruding from the outer peripheral surface of the first connector body can be pushed by the second connector, so that the protective cover rotates towards the outer side of the first connector body, to open the opening located on the end surface and form a channel extending in the insertion direction of the second connector, for allowing the second connector to move therein and be inserted into the opening.

In an optional embodiment, the protective cover is slidably mounted on the first connector body, and the protective cover is configured to continue to be pushed by the second connector after being pushed and rotated by the second connector, so as to slide in the insertion direction of the second connector.

The protective cover is provided to be slidably installed on the first connector body, enabling that the protective cover continues to be pushed by the second connector to slide, after being pushed and rotated by the second connector, so as to avoid interfering with the movement of the second connector in the insertion direction, and make the second connector inserted into the opening.

In an optional embodiment, the first connector body includes an end surface and an outer peripheral surface, the end surface is provided with the opening, the outer peripheral surface surrounds the end surface, the outer peripheral surface is provided with at least one first sliding slot extending in the insertion direction of the second connector, and the at least one protective cover slidably fits/operates with the at least one first sliding slot.

By providing the at least one first sliding slot on the outer peripheral surface of the first connector body, the at least one protective cover can stably slide in the insertion direction of the at least one second connector when being pushed by the at least one second connector.

In an optional embodiment, the protective cover includes a cover body and at least one fulcrum portion, the cover body is used to cover the opening, the at least one fulcrum portion is fixed to the cover body, and the at least one fulcrum portion is rotatably and slidably engaged in (fits with) the at least one first sliding slot, the protective cover is configured to be pushed, when the second connector is inserted into the first connector, by the second connector to rotate around the at least one fulcrum portion, and slide along the at least one first sliding slot.

The protective cover has a simple structure and is convenient to manufacture. The cover body can make, along with the movement of the at least one fulcrum portion, actions of covering the opening, opening the opening and sliding along the at least one first sliding slot, to achieve effects of protecting the interior of the first connector body, automatically opening the opening due to pushing of the second connector to allow insertion of the second connector, and sliding due to pushing of the second connector to avoid interference with the insertion of the second connector.

In an optional embodiment, the protective cover includes two fulcrum portions, the two fulcrum portions are provided opposite to each other in the width direction of the cover body, and the first sliding slots are provided corresponding to the fulcrum portions, with each of the fulcrum portions being rotatably and slidably engaged in the corresponding first sliding slot.

By providing two fulcrum portions oppositely in the width direction of the cover body, two first sliding slots are correspondingly provided on the first connector body, to improve the stability between the protective cover and the first connector body, so that the protective cover stably rotates and slides under pushing of the second connector, which can prolong the service life of the protective cover and further prolong the service life of the first connector.

In an optional embodiment, one side of the protective cover away from the first connector body is provided with a first fastening part, and the first fastening part is configured to cooperate, when the protective cover is pushed and rotated by the second connector, with the second fastening part on the second connector, so that the protective cover can be pushed by the second connector to slide in the insertion direction of the second connector.

The first fastening part is provided to cooperate with the second fastening part on the second connector, enabling that when the second connector is inserted into and connected with the first connector, the first connector can slide in the insertion direction under pushing of the second connector, due to the fastening of the first fastening part and the second fastening part; meanwhile, when the second connector is pulled out of the first connector, the second connector can drive the protective cover to move to allow the protective cover to automatically close the opening, thereby realizing automatic protection during the battery replacement operation, that is, when the second connector and the first connector are separated from each other, the protective cover is pulled by the second connector to slide in the direction opposite to the insertion direction, until the protective cover slides to the stop position and rotates toward the opening and the first fastening part and the second fastening part are separated from each other, so that the protective cover can cover the opening to prevent external contaminants from entering the interior of the first connector body.

In an optional embodiment, the first connector includes two protective covers, and the two protective covers are provided to be opened opposite to each other and together cover the opening.

Compared with the solution in which only one protective cover is provided, the arrangement of two protective covers can shorten the movement path of the protective cover switching from the state of covering the opening to the state of opening the opening, so as to avoid occurrence of the situation that too long movement path interferes with the insertion of the second connector. Meanwhile, compared with the solution in which more than two protective covers are provided, the arrangement of two protective covers can effectively reduce the manufacturing cost of the first connector.

In an optional embodiment, the ends of the two protective covers that are close to each other are respectively provided with a first magnetic element and a second magnetic element, wherein when the two protective covers cover the opening, the first magnetic element and the second magnetic element attract each other.

The two protective covers are respectively provided with the first magnetic element and the second magnetic element, and when the two protective covers cover the opening, the first magnetic element and the second magnetic element can attract each other, which can ensure that the protective cover covers stably the opening, ensure the protective effect on the interior of the first connector body and ensure the safety of the first connector body.

In a second aspect, the present application further provides a battery, including: a box body; at least one battery cell, accommodated in the box body; and the first connector according to any one of the foregoing embodiments, wherein the first connector is installed on the box body.

The battery supplies power to the electric device body, and quick replacement operation may be performed between it and the electric device body. During the transportation and assembly processes of the battery, the protective cover can effectively protect the first connector body, prevent external contaminants from entering the opening to affect the performance of the first connector body, so that the battery can be smoothly assembled on the electric device body, further ensuring that the battery and the electric device body work normally.

In a third aspect, the present application further provides a connector assembly, including: the first connector according to any one of the foregoing embodiments; and at least one second connector configured to be inserted into and cooperating with the first connector.

In an optional embodiment, the second connector includes a second connector body and a top pushing portion, the second connector body is used to be inserted into and cooperate with the first connector body, and the top pushing portion is connected with the second connector body and is used for pushing the protective cover.

The second connector body is provided with the top pushing portion, enabling that during the process of inserting the second connector body into the first connector body, the protective cover is pushed so that the protective cover opens the opening of the first connector body to allow the second connector body to be inserted into the opening.

In an optional embodiment, the top pushing portion is provided with a second fastening part, and the second fastening part is used to cooperate with the first fastening part on the protective cover, so that the protective cover can be pushed by the second connector to slide in the insertion direction of the second connector.

The top pushing portion is provided with the second fastening part, enabling that when the protective cover is pushed, the first fastening part and the second fastening part are fastened to each other, so that the protective cover can move with the top pushing portion, so as to realize sliding and automatic closing of the protective cover.

In an optional embodiment, the number of the top pushing portions is two, and the two top pushing portions are arranged spacedly for pushing the two protective covers.

The two top pushing portions correspond to the two protective covers on the first connector, so that when the second connector is inserted into and connected with the first connector, the top pushing portions push the corresponding protective covers to rotate to open the opening.

In an optional embodiment, the present application further provides an electric device, including: an electric device body; a battery used for supplying power to the electric device body; and a connector assembly according to any one of the foregoing embodiments, wherein the first connector is disposed on one of the electric device body and the battery, and the at least one second connector is disposed on the other of the electric device body and the battery.

The electric device includes a connector assembly, i.e., includes a first connector and at least one second connector. When the electric device body and the battery are not assembled, the at least one protective cover on the first connector can effectively play the role of protecting the first connector body, to prevent contaminants from entering the opening of the first connector body and affecting the first connector body, thereby ensuring the service life and safety of the first connector. When the electric device body and the battery are assembled, the at least one second connector can push, during the process of being inserted into the first connector, the at least one protective cover to open the opening of the first connector for insertion of the at least one second connector.

The above description is only an overview of the technical solution of the present application. In order to more clearly understand the technical means of the present application to make it able to be implemented according to the contents of the description, and in order to make the above and other purposes, features and advantages of the present application more obvious and understandable, the embodiments of the present application are listed below.

### Brief Description of Drawings

In order to more clearly illustrate the technical solutions of the embodiments of the present application, the drawings that are required to be used in the embodiments will be briefly introduced below. It should be understood that the following drawings only show some embodiments of the present application, and thus it should not be regarded as a limitation on the scope, and those skilled in the art can also obtain other related drawings based on these drawings without paying creative work.
FIG. 1 is a schematic structural view of a vehicle provided in some embodiments of the present application;
FIG. 2 is a three-dimensional view of the first connector when the opening is covered, according to some embodiments of the present application;
FIG. 3 is a three-dimensional view of the first connector when the opening is opened, according to some embodiments of the present application;
FIG. 4 is a three-dimensional view of the second connectors when being inserted into and connected with the first connector, according to some embodiments of the present application;
FIG. 5 is a three-dimensional view of the first connector when the opening is covered, according to some embodiments of the present application;
FIG. 6 is a three-dimensional view of the second connectors when being inserted into and connected with the first connector, according to some embodiments of the present application;
FIG. 7 is a three-dimensional view of the first connector when the opening thereof is opened by the second connectors, according to some embodiments of the present application;
FIG. 8 is a three-dimensional view of a protective cover according to some embodiments of the present application;
FIG. 9 is a schematic view of the first connector according to some embodiments of the present application;
FIG. 10 is an enlarged view of Place X in FIG. 9; and
FIG. 11 is a three-dimensional view of a second connector according to some embodiments of the present application.

Reference signs: 1000-vehicle; 300-motor; 200-controller; 100-battery;
10-first connector; 11-first connector body; 11a-high-low-voltage terminal; 110-opening; 111-end surface; 112-outer peripheral surface; 113-first sliding slot; 1130-firstend point; 1131 -second end point; 114-seond sliding slot; 12-protective cover; 120-cover body; 1200-step protrusion; 121-fulcrum portion; 122-supporting element; 123-bump; 124-first fastening part; 1240-incline surface; 20-second connector; 21-top pushing portion; 210-second fastening part; 22-second connector body.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, but not all of the embodiments of the present application. Based on the embodiments in the present application, all other embodiments obtained by the person skilled in the art without paying creative efforts fall within the protection scope of the present application.

Unless otherwise defined, all technical and scientific terms used in the present application have the same meanings as commonly understood by those skilled in the technical field of the present application, In the present application, the terms used in the description of the application are used only to describe the purposes of the embodiments, not intended to limit the present application. The terms "comprising" and "having" and any variations thereof in the description and claims of the present application and the above description of the drawings are intended to cover non-exclusive inclusion. The terms "first", "second" and the like in the description and claims of the present application or the above drawings are used to distinguish different objects, rather than to describe a specific sequence or primary-subordinate relationship.

Reference made in the present application to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments.

In the description of the present application, it should be noted that, unless otherwise clearly specified and defined, the terms "installation", "link", "connection" and "attachment" should be understood in a broad sense. For example, it may be fixed connection, it may also be detachable connection or integral connection; it may be direct connection, it may also be indirect connection through an intermediary, or it may be internal communication between two elements. The person skilled in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are A and B simultaneously, and there is only B. In addition, the character "/" in the present application generally indicates that the associated objects therebefore and thereafter have an "or" relationship.

In the embodiments of the present application, the same reference signs represent the same components, and for the sake of brevity, detailed descriptions of the same components are omitted in different embodiments. It should be understood that the thickness, length, width and other dimensions of the various components in the embodiments of the present application shown in the drawings, as well as the overall thickness, length and width of the integrated device, are for illustrative description only, and should not constitute any limitation to the present application.

"Multiple" in the present application refers to two or more (including two).

At present, from the perspective of the development of the market situation, electric vehicle has become an important part of the sustainable development of the automobile industry. In order to solve the problems of long charging time and short cruising range, the battery quick replacement solution for electric vehicles emerge at the times require, which alleviates the existing problem of slow charging speed to a certain extent.

During the quick replacement operation of the electric vehicle, the connector is exposed to the outside, which makes it easy to be damaged and have reduced safety.

The inventors found through researches that the reason for the above problems is that the battery is not always assembled with the vehicle body during the battery replacement operation. During the battery storage, transportation and quick replacement processes, the connector is exposed to the outside, so that external contaminants or dust easily enter it, affecting the performance of the connector itself, such as causing increased resistance of the high-low-voltage terminal in the connector or blocked liquid cooling joint, and resulting in damage to the connector and reduced safety.

Based on the above considerations, in order to solve the problem that the connector is easy to be damaged and has reduced safety in the prior art, the inventors has designed a first connector after in-depth researches. The first connector is used for being connected with and cooperating with the second connector in an insertion way. The first connector includes a first connector body and protective cover(s). The first connector body has an opening for allowing the second connector to be inserted thereinto. The protective cover is movably mounted on the first connector body and used to cover the opening. In the above, the protective cover is configured to be pushed by the second connector to open the opening, when the second connector is inserted into and connected with the first connector.

When the second connector is not inserted into and connected with the first connector, for example, during storage or transportation, the protective cover may cover the opening to prevent the opening from being exposed to the outside. When the second connector is inserted into and connected with the first connector, the protective cover is pushed along with the inserting action of the second connector, thereby opening the opening, exposing the opening for allowing the second connector to be inserted thereinto, and realizing the connection between the first connector and the second connector. Since the opening of the first connector body is opened when the second connector is inserted, external contaminants may be effectively prevented from entering the opening, preventing occurrence of the situation that the external contaminants affect the performance of the first connector body itself, further avoiding damage to the first connector body, ensuring the safety of the first connector body, and enabling the battery and the vehicle body to work normally. Compared with the situation in which the first connector body is protected by a control system controlling the movement of the protective cover, with the control system including the distance measuring sensor module, the motor control system, and the pressure sensor module, the case where the protective cover can be movably provided on the first connector body and protect the first connector body through the pushing of the second connector has the advantages of simple structure, and low manufacturing and operating costs.

The present application provides a first connector, which may be applied to batteries, or may also be applied to various devices using batteries, such as vehicles, ships, or aircrafts. When the first connector is applied to the battery, the battery is inserted into and connected with the electric device body through the first connector, so that the battery supplies power to the electric device body. For example, when the electric device body is a vehicle, the first connector has a high-low-voltage terminal and a liquid cooling joint, the vehicle has a second connector, and the second connector has a corresponding high-low-voltage terminal and liquid cooling joint, wherein through cooperation between the first connector and the second connector in an insertion way, the high-low-voltage terminals and the liquid cooling joints may be connected at the same time, so that a complete high-low-voltage system and a complete liquid cooling system are formed between the vehicle and the battery, enabling the battery to supply power to the vehicle. When the first connector is applied to the electric device body, the electric device body is connected, in an insertion way, with the battery through the first connector, so that the battery supplies power to the electric device. For example, when the electric device is a vehicle, the first connector has a high-low-voltage terminal and a liquid cooling joint, the battery has a second connector, and the second connector has corresponding high-low-voltage terminal and liquid cooling joint, wherein through cooperation between the first connector and the second connector in an insertion way, the high-low-voltage terminals and the liquid cooling joints may be connected at the same time, so that a complete high-low-voltage system and a complete liquid cooling system are formed between the vehicle and the battery, enabling the battery to supply power to the vehicle.

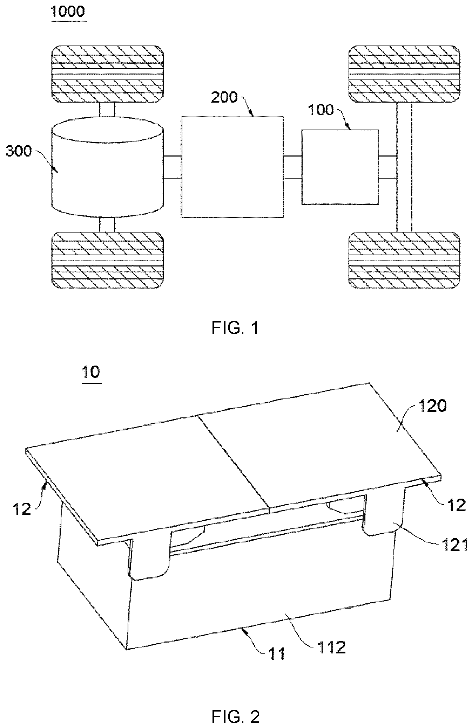

Hereinafter, description is made by using a vehicle 1000 as the electric device for example. Referring to FIG. 1, FIG. 1 is a schematic structural view of a vehicle 1000 provided in some embodiments of the present application.

A controller 200, a motor 300 and a battery 100 may be provided inside the vehicle 1000. The controller 200 is used to control the battery 100 to supply power to the motor 300. For example, the battery 100 may be provided at the bottom or head or tail of the vehicle 1000. The battery 100 may be used to supply power to the vehicle. For example, the battery 100 may be used as an operating power source of the vehicle 1000, for a circuit system of the vehicle 1000, for example, for working power requirements during starting, navigating, and running of the vehicle 1000. In another embodiment of the present application, the battery 100 can not only be used as an operating power source for the vehicle 1000, but also be used as a driving power source for the vehicle 1000, to replace or partially replace fuel oil or natural gas to provide driving power for the vehicle 1000.

The battery 100 may be disassembled from the vehicle, so as to realize the operation of replacing the battery of the vehicle 1000. When the battery power is depleted, the battery whose power is depleted may be disassembled and replaced with another battery 100 to continue to supply power to the vehicle 1000.

The connector serves as the connection structure of the battery terminal. When installing the battery 100 in the vehicle, the connector may cooperate, in an insertion way, with the connection structure of the vehicle, so that the battery can supply power to the vehicle.

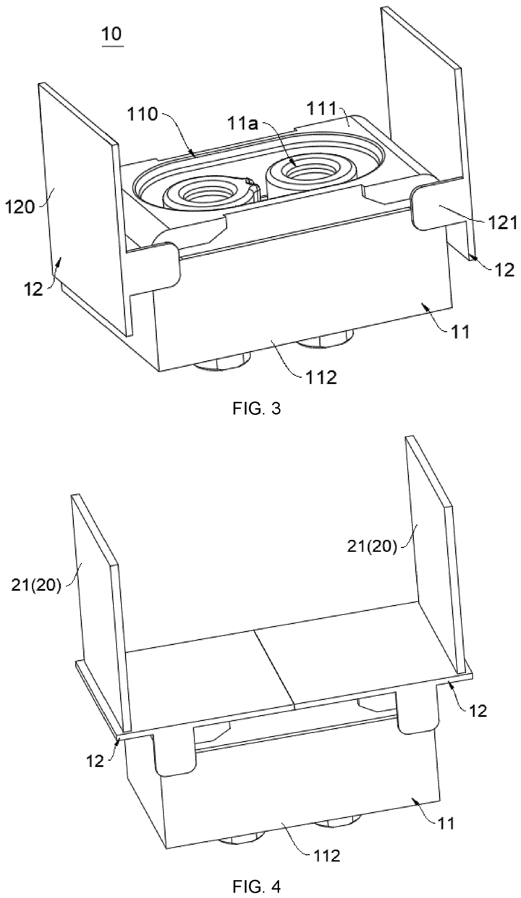

According to some embodiments of the present application, referring to FIGS. 2-4, FIG. 2 is a three-dimensional view of the first connector 10 when the opening 110 is covered according to some embodiments of the present application, FIG. 3 is a three-dimensional view of the first connector 10 when the opening 110 is opened according to some embodiments of the present application, and FIG. 4 is a three-dimensional view of the second connectors 20 when being inserted into and connected with the first connector 10 according to some embodiments of the present application. The first connector 10 is used for cooperating with the second connector 20 in an insertion way. The first connector 10 includes a first connector body 11 and protective covers 12. The first connector body 11 has an opening 110 for allowing the second connector 20 to be inserted thereinto. The protective covers 12 are movably mounted on the first connector body 11 for covering the opening 110. In the above, the protective cover 12 is configured to be pushed by the second connector 20 to open the opening 110, when the second connector 20 is inserted into and connected with the first connector 10.

The first connector 10 is used for cooperating with the second connector 20 in an insertion way. The first connector 10 may be provided on the battery, and the second connector 20 may be provided on the electric device body; or the first connector 10 may be set on the electric device body, and the second connector 20 may be provided on the battery. The first connector body 11 is a main body structure that cooperates with the second connector 20 in an insertion way, and the first connector body 11 may be provided therein with a high-low-voltage terminal and/or a liquid cooling joint (in FIG. 3, the high-low-voltage terminal 11a is exemplarily shown), so as to be connected with corresponding high-low-voltage terminal and/or liquid cooling joint of the second connector 20 when the second connector 20 is inserted into and connected with the first connector 10 in place, so as to realize that a complete high-low-voltage system and/or a complete liquid cooling system are formed between the first connector 10 and the second connector 20. The opening 110 provided on the first connector body 11 is used for exposing the high-low-voltage terminal and/or liquid cooling joint for insertion of the second connector 20.

The protective cover 12 is a component movably provided on the first connector body 11, and is used to cover the opening 110 to protect the interior of the first connector body 11, for example, to prevent the high-low-voltage terminal and/or liquid cooling joint from contacting the outside, or to open the opening 110 under the pushing of the second connector 20 to expose the interior of the first connector body 11, for example, to expose the high-low-voltage terminal and/or liquid cooling joint for insertion of the second connector 20.

When the second connector 20 is not inserted into and connected with the first connector 10, for example, during storage or transportation, the protective cover 12 covers the opening 110 to prevent the opening 110 from being exposed to the outside. When the second connector 20 is inserted into and connected with the first connector 10, the protective cover 12 is pushed along with the insertion action of the second connector 20, thereby opening the opening 110, exposing the opening 110 for the insertion of the second connector 20, realizing the connection of the first connector 10 with the second connector 20. Since the opening 110 of the first connector body 11 is opened when the second connector 20 is inserted, it can effectively prevent external contaminants from entering the opening 110, prevent occurrence of the situation that the external contaminants affect the performance of the first connector body 11 itself, and further avoid damage to the first connector body 11 and ensure the safety of the first connector body 11, enabling that the battery and the electric device body work normally. Meanwhile, compared with the situation where the first connector body 11 is protected by a control system controlling the movement of the protective cover, with the control system including the distance measuring sensor module, the motor control system, and the pressure sensor module, the case, where the first connector body is protected though pushing of the second connector 20 to achieve the movement of the protective cover 12, has the advantages of simple structure and low manufacturing and operating costs.

According to some embodiments of the present application, optionally, the protective cover 12 is rotatably mounted on the first connector body 11, and the protective cover 12 is configured to be pushed, when the second connector 20 is inserted into and connected with the first connector 10, by the second connector 20 to rotate to open the opening 110, with the rotation axis of the protective cover 12 being perpendicular to the insertion direction of the second connector 20.

The protective cover 12 is rotatably installed on the first connector body 11, which means that the protective cover 12 can cover the opening 110 or open the opening 110 by rotating relative to the first connector body 11.

Optionally, the protective cover 12 may also be movably connected to the first connector body 11 in other ways. For example, the protective cover 12 is slidably mounted on the first connector body 11 in a direction perpendicular to the insertion direction of the second connector 20, which may also realize the effect of the protective cover 12 covering and opening the opening 110.

When the protective cover 12 is pushed by the second connector 20, it can rotate relative to the first connector body 11 to open the opening 110 for allowing the second connector 20 to be inserted into the opening 110. By setting the rotation axis of the protective cover 12 to be perpendicular to the insertion direction of the second connector 20, it enables that the protective cover 12 may not interfere, when rotating, with the insertion of the second connector 20, ensuring that the second connector 20 can be inserted smoothly into the opening 110.

According to some embodiments of the present application, optionally, the first connector body 11 includes an end surface 111 and an outer peripheral surface 112, the opening 110 is disposed on the end surface 111, and the outer peripheral surface 112 surrounds the end surface 111, wherein when the protective cover 12 covers the opening 110, one end of the protective cover 12 protrudes from the outer peripheral surface 112 of the first connector body 11 for the second connector 20 to push and rotate.

The end surface 111 of the first connector body 11 may be an end surface of the first connector body 11 that abuts with the second connector body 22 when the first connector body cooperates with the second connector 20. The outer peripheral surface 112 of the first connector body 11 may surround the outer surface of the end surface 111.

"When the protective cover 12 covers the opening 110, one end of the protective cover 12 protrudes from the outer peripheral surface 112 of the first connector body 11" means that one end of the protective cover 12 protrudes from the outer peripheral surface 112 of the first connector body 11, so that when the second connector 20 pushes the protective cover 12, the place where the pushing force acts is the part protruding from the outer peripheral surface 112 of the first connector body 11, so that the protective cover 12 can rotate.

Optionally, the protective cover 12 may be provided on the end surface 111, and the rotation axis of the protective cover 12 is located above the end surface 111. In other words, the protective cover 12 may be provided on the outer peripheral surface 112, and the rotation axis of the protective cover 12 can pass through the outer peripheral surface 112. For example, the protective cover 12 can include a cover body 120 and at least one fulcrum portion 121, the cover body 120 is plate-shaped, and the fulcrum portion 121 includes a supporting element 122 vertically connected to the cover body 120, the outer peripheral surface 112 may be provided with a groove (not shown in the figures), and the supporting element 122 may be provided with a bump 123 (not shown in FIGS. 2-4), the bump 123 is rotatably provided in the groove, and the second connector 20 has a top pushing portion 21, as shown in FIG. 4. The top pushing portion 21 is a component corresponding to the protective cover 12, may be plate-shaped, and is used to push the cover body 120 of the protective cover 12 to rotate around the groove, to open the opening 110.

One end of the protective cover 12 is provided to protrude from the outer peripheral surface 112 of the first connector body 11, enabling that the part protruding from the outer peripheral surface 112 of the first connector body 11 can be pushed by the second connector 20, so as to make the protective cover 12 rotate toward the outer side of the first connector body 11, thereby opening the opening 110 on the end surface 111, and forming a channel extending in the insertion direction of the second connector 20 for the second connector 20 to move and be inserted into the opening 110.

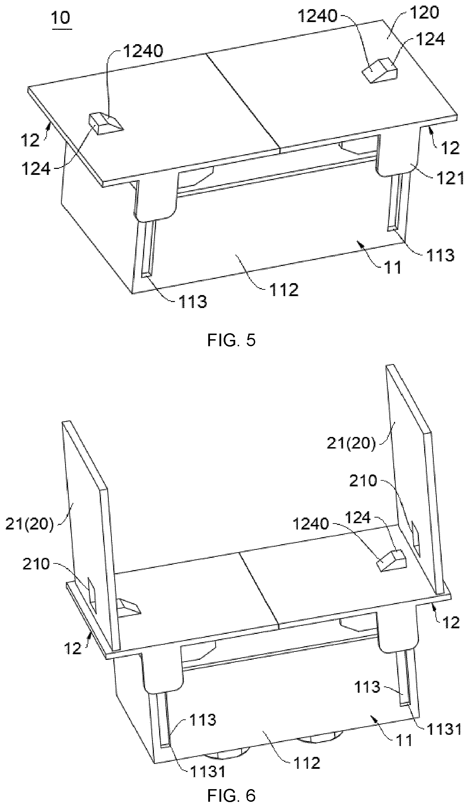

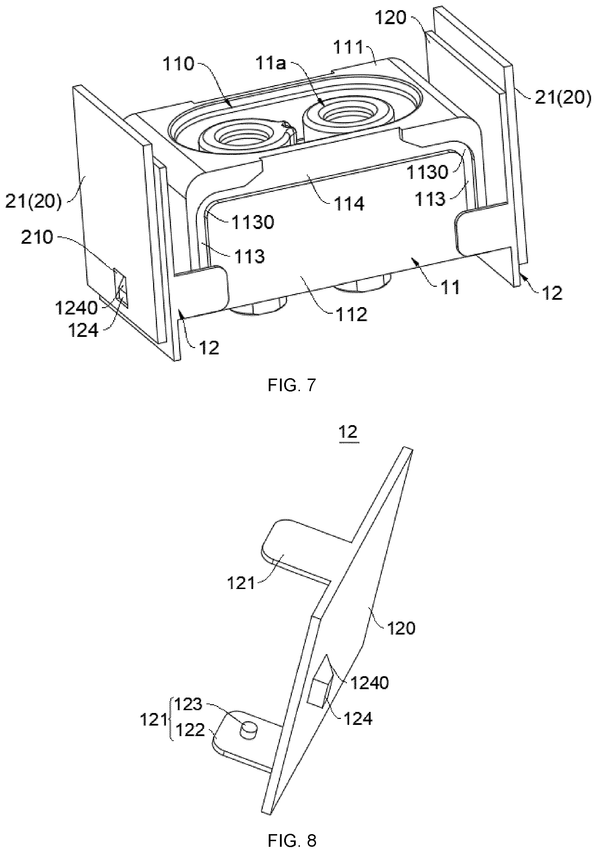

According to some embodiments of the present application, referring to FIG. 5-FIG. 7, FIG. 5 is a three-dimensional view of the first connector 10 when the opening 110 is covered according to some embodiments of the present application, FIG. 6 is a three-dimensional view of the second connectors 20 when being inserted into and connected with the first connector 10, and FIG. 7 is a three-dimensional view of the first connector 10 when the opening 110 is opened by the second connectors 20 according to some embodiments of the present application. The protective cover 12 is slidably mounted on the first connector body 11, and the protective cover 12 is configured to continue, after being pushed and rotated by the second connector 20, to be pushed by the second connector 20, so as to slide in the insertion direction of the second connector 20.

"The protective cover 12 is slidably mounted on the first connector body 11" means that the protective cover 12 can also slide relative to the first connector body 11 under the condition that the protective cover 12 is rotatably connected to the first connector body 11.

The protective cover 12 is provided to be slidably mounted on the first connector body 11, enabling that the protective cover 12 continues, after being pushed and rotated by the second connector 20, to be pushed by the second connector 20 to slide, so as to avoid interfering with the movement of the second connector 20 in the insertion direction, so that the second connector 20 is inserted into the opening 110. In conjunction with FIG. 3 and FIG. 7, compared with the solution in which the protective cover 12 does not slide relative to the first connector body 11 and the solution in which the protective cover 12 slides relative to the first connector body 11, it can be seen in FIG. 3 that after the protective cover 12 is rotated to open the opening 110, in the insertion direction of the second connector 20, the protective cover 12 has a certain height in the direction facing the second connector 20, which may interfere with the insertion of the second connector 20, so in the solution shown in FIG. 3, it is necessary to provide, on the second connector 20, a chamber for accommodating the protective cover 12 to solve the interference problem. Therefore, since a chamber needs to be additionally provided for the second connector 20, the manufacturing cost of the second connector 20 is increased. However, in FIG. 7, since the protective cover 12 can slide with the insertion of the second connector 20, it does not interfere with the insertion of the second connector 20, which can reduce the manufacturing cost compared with the solution in which the protective cover 12 does not slide relative to the first connector body 11.

According to some embodiments of the present application, the first connector body 11 includes an end surface 111 and an outer peripheral surface 112, the opening 110 is disposed on the end surface 111, the outer peripheral surface 112 surrounds the end surface 111, and the outer peripheral surface 112 is provided with at least one first sliding slot 113 extending in the insertion direction of the second connector 20, and the protective cover 12 slidably fits/cooperates with the first sliding slot 113.

The two opposite end points of the first sliding slot 113 are respectively defined as a first end point 1130 and a second end point 1131, and the first sliding slot 113 is in a slot structure extending from the first end point 1130 to the second end point 1131 in the insertion direction of the second connector 20. The first sliding slot 113 can make the protective cover 12 slide in the insertion direction of the second connector 20.

By providing the at least one first sliding slot 113 on the outer peripheral surface 112 of the first connector body 11, the protective cover 12 is enabled to smoothly and stably slide in the insertion direction of the second connector 20 when being pushed by the second connector 20.

According to some embodiments of the present application, referring to FIG. 8, FIG.8 is a three-dimensional view of a protective cover 12 according to some embodiments of the present application. The protective cover 12 includes a cover body 120 and fulcrum portions 121, the cover body 120 is used to cover the opening 110, the fulcrum portions 121 are fixed on the cover body 120, and the fulcrum portions 121 rotatably and slidably fit with the first sliding slots 113, the protective cover 12 is configured to be pushed, when the second connector 20 is inserted into and connected with the first connector 10, by the second connector 20 to rotate around the fulcrum portions 121 and slide along the first sliding slots 113.

The cover body 120 may be plate-shaped, so as to fit on the end surface 111 of the first connector body 11 to tightly cover the opening 110, thereby protecting the interior of the first connector 10.

The fulcrum portion 121 may be a component connected to the cover body 120, and the fulcrum portion 121 is a component that rotatably and slidably fits with the first sliding slot 113. Optionally, the fulcrum portion 121 may include a supporting element 122 and a bump 123, the support 122 may be vertically connected to the cover body 120, the bump 123 is provided on the supporting element 122 and the rotation axis of the bump 123 is perpendicular to the insertion direction of the second connector 20, the bump 123 is provided in the first sliding slot 113 and can rotate and slide in the first sliding slot 113. Optionally, the second connector 20 has a top pushing portion 21, as shown in FIG. 6 and FIG. 7, the top pushing portion 21 is a component corresponding to the protective cover 12, may be plate-shaped, and is used to push the cover body 120 of the protective cover 12 to rotate around the groove to open the opening 110.

The protective cover 12 has a simple structure and is easy to manufacture. The cover body 120 moves along with the fulcrum portion 121, and can make actions of covering the opening 110, opening the opening 110 and sliding in the first sliding slot 113, so as to realize effects of protecting the interior of the first connector body 11, automatically opening the opening 110 through the pushing of the second connector 20 to allow insertion of the second connector 20, and sliding through the pushing of the second connector 20 to avoid interference with the insertion action of the second connector 20.

According to some embodiments of the present application, the protective cover 12 includes two fulcrum portions 121, and the two fulcrum portions 121 are arranged opposite to each other in the width direction of the cover body 120, the first sliding slots 113 are provided corresponding to the fulcrum portions 121, and each fulcrum portion 121 rotatably and slidably fits in the corresponding first sliding slot 113.

"The first sliding slots 113 are provided corresponding to the fulcrum portions 121" means that in the width direction of the cover body 120, the two opposite surfaces of the first connector body 11 are respectively provided with the first sliding slots 113 to cooperate with the corresponding fulcrum portions 121.

Optionally, the first connector body 11 may be provided with a second sliding slot 114, and the second sliding slot 114 communicates with the end surface 111 and the first sliding slots 113 of the first connector body 11, for the assembly of the protective cover 12, that is, the fulcrum portions 121 of the protective cover 12 may first enter the second sliding slot 114 from the intersection position of the second sliding slot 114 and the first end point 1130 of the end surface 111, and move along the second sliding slot 114 to be assembled in the first sliding slots 113.

Two fulcrum portions 121 are provided oppositely in the width direction of the cover body 120, and two first sliding slots 113 are correspondingly provided on the first connector body 11, so as to improve the stability between the protective cover 12 and the first connector body 11, enabling that the protective cover 12 smoothly and stably rotate and slide under the pushing of the second connector 20, which can prolong the service life of the protective cover 12 and further prolong the service life of the first connector 10.

According to some embodiments of the present application, referring to FIG. 6-FIG. 8, one side of the protective cover 12 away from the first connector body 11 is provided with a first fastening part 124, wherein the first fastening part 124 is configured to cooperate with the second fastening part 210 on the second connector when the protective cover 12 is pushed and rotated by the second connector 20, so that the protective cover 12 can be pushed by the second connector 20 to slide in the insertion direction of the second connector 20.

The first fastening part 124 is a component provided on the side of the protective cover 12 away from the first connector body 11 and used for being fastened with the second fastening part 210 on the top pushing portion 21 of the second connector 20. The first fastening part 124 may be a fastening block, and the second fastening part 210 may be a fastening groove provided on the top pushing portion 21.

The first fastening part 124 is provided to cooperate with the second fastening part 210 on the second connector 20, enabling that when the second connector is inserted into and connected with the first connector 10, the first connector 10 can slide in the insertion direction under the pushing of the second connector 20, due to fastening of the first fastening part 124 and the second fastening part 210. Meanwhile, when the second connector 20 is pulled out of the first connector 10, the top pushing portion 21 can drive the protective cover 12 to move so as to realize that the protective cover 12 automatically closes the opening 110, and then realize the automatic protection in the battery replacement operation. That is, when the second connector 20 and the first connector 10 are disengaged from each other, the protective cover 12 is pulled by the top pushing portion 21 to slide in the direction opposite to the insertion direction until the protective cover 12 slides to the stop position (the first end point 1130) and rotate toward the opening 110, and the first fastening part 124 and the second fastening part 210 are disengaged from each other, finally the protective cover 12 can cover the opening 110 to prevent external contaminants from entering the interior of the first connector body 11.

Optionally, an inclined surface 1240 is formed at the end of the first fastening part 124 away from the outer peripheral surface 112 of the first connector body 11, and the providing of the inclined surface 1240 allows the first fastening part 124 to be easily detached from the second fastening part 210, so as to facilitate realizing the automatic closing of the protective cover 12.

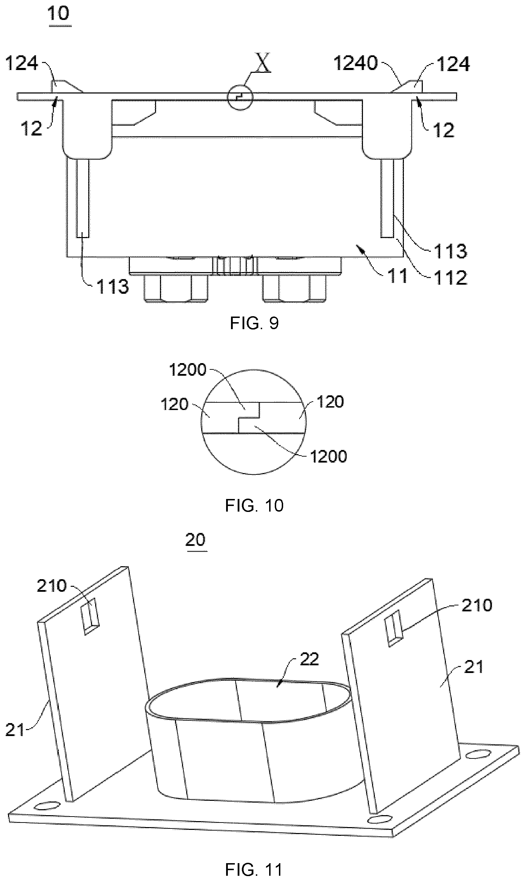

The present application does not limit the number of protective covers 12, which may be one, two, three or four, and so on. According to some embodiments of the present application, with reference to FIG. 9, FIG. 9 is a schematic view of the first connector 10 according to some embodiments of the present application. The first connector 10 includes two protective covers 12, the two protective covers 12 are provided to be opened opposite to each other and cover the opening 110 together.

The two protective covers 12 are provided to be opened opposite to each other, which means that the two protective covers 12 are symmetrically arranged along the center line of the first connector body 11 in the width direction of the protective cover 12, so as to cover or open the opening 110 together.

Compared with the solution in which only one protective cover 12 is provided, two protective covers 12 are provided, which can shorten the movement path of the protection cover 12 switching from the state of covering the opening 110 to the state of opening the opening 110, so as to avoid occurrence of the situation that too long movement path interferes with the insertion of the second connector 20. Meanwhile, compared with the solution of providing more than two protective covers 12, providing two protective covers 12 can effectively reduce the manufacturing cost of the first connector 10.

Optionally, referring to FIG. 10, FIG. 10 is an enlarged view of Place X in FIG. 9. The ends, facing each other, of the two protective covers 12 which are provided to be opened opposite to each other are provided with a step protrusion 1200 respectively. That is, the end of the cover body 120 is provided with the step protrusion 1200, so that when the two protective covers 12 cover the opening 110, the two protective covers 12 can fit each other through their respective step protrusions 1200, improving the protective effect on the opening 110.

According to some embodiments of the present application, the ends of the two protective covers 12 that are close to each other are respectively provided with a first magnetic element (not shown in the figures) and a second magnetic element (not shown in the figures). When the two protective covers 12 cover the opening 110, the first magnetic element and the second magnetic element attract each other.

The first magnetic element and the second magnetic element are components that can magnetically attract each other, for example, the first magnetic element and the second magnetic element are magnets that can attract each other. The first magnetic element and the second magnetic element can be provided on the protective covers 12 through a connection manner of bonding or fastening, etc.

By providing the first magnetic element and the second magnetic element on the two protective covers 12 respectively, when the two protective covers 12 cover the opening 110, the first magnetic element and the second magnetic element can attract each other, which can ensure that the protective covers 12 stably cover the opening 110 to protect the interior of the first connector body 11, avoid damage to the first connector body 11, ensure the first connector body 11, and thus ensure the normal working of the battery.

According to some embodiments of the present application, the present application also provides a battery, which includes a box body, at least one battery cell, and the first connector 10 described in the above embodiments. The at least one battery cell is accommodated in the box body, and the first connector 10 is installed on the box body.

The battery supplies power to the electric device body, and quick replacement operation may be performed between it and the electric device body. During the transportation and assembly processes of the battery, the protective cover 12 can effectively protect the first connector body 11, prevent external contaminants from entering the opening 110 to affect the first connector body 11, so that the battery may be smoothly assembled to the electric device body, thereby ensuring the normal working of the battery and the electric device body.

According to some embodiments of the present application, the present application further provides a connector assembly, the connector assembly includes a second connector 20 and the first connector 10 described above, and the second connector 20 is used for being inserted into and connected with the first connector 10.

According to some embodiments of the present application, referring to FIG. 11, FIG. 11 is a three-dimensional view of the second connector 20 according to some embodiments of the present application. The second connector 20 includes a second connector body 22 and a top pushing portion 21, the second connector body 22 is used for being inserted into and connected with the first connector body 11, and the top pushing portion 21 is connected to the second connector body 22, and used for pushing the protective cover 12.

The second connector body 22 is a main structure that cooperates with the first connector body 11 in an insertion way. The second connector body 22 may be provided therein with a high-low-voltage terminal and/or a liquid cooling joint, to cooperate with the high-low-voltage terminal and/or liquid cooling joint in the first connector body 11 to form a complete high-low-voltage system and/or a complete liquid cooling system.

The top pushing portion 21 is a component connected to the second connector body 22, which may be plate-shaped, and is used to push the protective cover 12 of the first connector 10.

By providing the top pushing portion 21 on the second connector body 22, the protective cover 12 is pushed, in the process of inserting the second connector body 22 into the first connector body 11, to make the protective cover 12 open the opening 110 of the first connector body 11, to allow the second connector body 22 to be inserted into the opening 110.

According to some embodiments of the present application, the top pushing portion 21 is provided with a second fastening part 210, and the second fastening part 210 is used to cooperate with the first fastening part 124 on the protective cover 12, so that the protective cover 12 can be pushed by the second connector 20 to slide in the insertion direction of the second connector 20.

The second fastening part 210 is a structure for being fastened with the first fastening part 124 on the protective cover 12. When the first fastening part 124 is a fastening block, the second fastening part 210 may be a fastening groove. The second fastening part 210 is provided on the top pushing portion 21, so that when the protective cover 12 is pushed, the first fastening part 124 and the second fastening part 210 are fastened with each other, so as to make the protective cover 12 move along with the top pushing portion 21 to realize the sliding and automatic closing of the protective cover 12.

According to some embodiments of the present application, the number of the top pushing portions 21 is two, and the two top pushing portions 21 are provided spacedly for pushing the two protective covers 12. The two top pushing portions 21 are corresponding to the two protective covers 12 on the first connector 10, so that when the second connector 20 is inserted into and connected with the first connector 10, the top pushing portions 21 push the respective corresponding protective covers 12 to rotate to open the opening 110.

According to some embodiments of the present application, the present application also provides an electric device. The electric device includes an electric device body, a battery and a connector assembly, and the battery is used to supply power to the electric device body. The first connector 10 is disposed on one of the electric device body and the battery, and the second connector 20 is disposed on the other of the electric device body and the battery. The electric device includes a connector assembly, that is, includes the first connector 10 and at least one second connector 20, where when the electric device body and the battery are not assembled, the protective cover 12 on the first connector 10 can effectively play a role of protecting the first connector body 11, so as to avoid contaminants entering the opening 110 of the first connector body 11 and affecting the performance of the first connector body 11, ensure the safety of the first connector 10, and ensure that the battery and the electric device body work normally. When the electric device body and the battery are assembled, the second connector 20 can push, in the process of being inserted into and connected with the first connector 10, the protective cover 12 to open the opening 110 of the first connector 10 for allowing the second connector 20 to be inserted thereinto.

According to some embodiments of the present application, referring to FIGS. 5-8, the present application also provides a first connector 10. The first connector 10 includes a first connector body 11 and two protective covers 12. The first connector 10 is used for cooperating with the second connector 20 in an insertion way, and the second connector 20 includes a second connector body 22 and a pushing portion 21. The two protective covers 12 are provided to be opened opposite to each other, and the outer peripheral surface 112 of the first connector body 11 is provided with first sliding slots 113 corresponding to the protective covers 12 and extending in the insertion direction of the second connector 20. The protective cover 12 includes a cover body 120 and fulcrum portions 121. The cover body 120 is used to cover the opening 110. The fulcrum portions 121 are fixed on the cover body 120. The fulcrum portions 121 slidably and rotatably fit the first sliding slots 113. The side of the cover body 120 away from the first connector body 11 is provided with a first fastening part 124 for cooperating with the second fastening part 210 on the second connector 20. When the second connector 20 is inserted into and connected with the first connector 10, the protective cover 12 can be automatically opened, that is, when the second connector 20 is inserted, the top pushing portion 21 pushes the cover body 120 to rotate to open the opening 110, the first fastening part 124 is fastened with the second fastening part 210 to continue to push the cover body 120 to slide along the first sliding slot 113 until the second connector 20 is inserted into the opening 110. When the second connector 20 is pulled out of the first connector 10, the protective cover 12 can be automatically closed to protect the interior of the first connector body 11, that is, when the second connector 20 and the first connector 10 are separated from each other, the protective cover 12 is pulled by the top pushing portion 21 to slide in the direction opposite to the insertion direction, until the protective cover 12 slides to the end of the first sliding slot 113 and rotates toward the opening 110, the first fastening part 124 and the second fastening part 210 are separated from each other, and finally the protective cover 12 can cover the opening 110 to prevent external contaminants from entering the interior of the first connector body 11, thereby ensuring the safety of the first connector body 11.

The above are only preferred embodiments of the present application, and are not intended to limit the present application. For those skilled in the art, there may be various modifications and changes in the present application. Any modifications, equivalent replacements, improvements, etc. made within the spirit and principles of the present application shall be included within the protection scope of the present application.

## Claims

1. A first connector, configured for cooperating with at least one second connector in an insertion way, comprising:
a first connector body, having an opening configured to allow the at least one second connector to be inserted thereinto; and
at least one protective cover, movably mounted on the first connector body, and configured for covering the opening,
wherein the at least one protective cover is configured to be pushed, when the at least one second connector is inserted into and connected with the first connector, by the at least one second connector to open the opening.

2. The first connector according to claim 1, wherein the at least one protective cover is rotatably mounted on the first connector body, and the at least one protective cover is configured to be pushed, when the at least one second connector is inserted into and connected with the first connector, by the at least one second connector to rotate to open the opening, with a rotation axis of the at least one protective cover is perpendicular to an insertion direction of the at least one second connector.

3. The first connector according to claim 2, wherein the first connector body includes an end surface and an outer peripheral surface, the opening is provided at the end surface, and the outer peripheral surface surrounds the end surface, wherein when the at least one protective cover covers the opening, one end of the at least one protective cover protrudes from the outer peripheral surface for being pushed and rotated by the at least one second connector.

4. The first connector according to claim 2 or 3, wherein the at least one protective cover is slidably mounted on the first connector body, and the at least one protective cover is configured to continue, after being pushed and rotated by the at least one second connector, to be pushed by the at least one second connector to move in the insertion direction of the at least one second connector.

5. The first connector according to claim 4, wherein the first connector body includes an end surface and an outer peripheral surface, the opening is provided at the end surface, the outer peripheral surface surrounds the end surface, the outer peripheral surface is provided with at least one first sliding slot extending in the insertion direction of the at least one second connector, and the at least one protective cover slidably fits with the at least one first sliding slot.

6. The first connector according to claim 5, wherein the at least one protective cover each comprises a cover body and at least one fulcrum portion, the cover body is configured to cover the opening, the at least one fulcrum portion is fixed to the cover body, and the at least one fulcrum portion rotatably and slidably fits with the at least one first sliding slot, the at least one protective cover is configured to be pushed, when the at least one second connector is inserted into and connected with the first connector, by the at least one second connector to rotate around the at least one fulcrum portion and move along the at least one first sliding slot.

7. The first connector according to claim 6, wherein the at least one protective cover each comprises two fulcrum portions, the two fulcrum portions are arranged opposite to each other in a width direction of the cover body, first sliding slots are provided corresponding to the fulcrum portions, and each of the fulcrum portions rotatably and slidably fits in the corresponding first sliding slot.

8. The first connector according to any one of claims 4-7, wherein one side of each of the at least one protective cover away from the first connector body is provided with a first fastening part, and the first fastening part is configured to cooperate, when the protective cover is pushed and rotated by corresponding second connector, with a second fastening part on the corresponding second connector, so that the protective cover can be pushed by the corresponding second connector to slide in the insertion direction of the corresponding second connector.

9. The first connector according to any one of claims 1-8, wherein the first connector includes two protective covers, and the two protective covers are provided to be opened opposite to each other and configured to together cover the opening.

10. The first connector according to claim 9, wherein ends of the two protective covers close to each other are respectively provided with a first magnetic element and a second magnetic element,
wherein when the two protective covers cover the opening, the first magnetic element and the second magnetic element attract each other.

11. A battery, comprising:
a box body;
at least one battery cell accommodated in the box body; and
the first connector according to any one of claims 1-10, wherein the first connector is installed on the box body.

12. A connector assembly, comprising:
the first connector according to any one of claims 1-10; and
at least one second connector configured for being inserted into and connected with the first connector.

13. The connector assembly according to claim 12, wherein the at least one second connector each comprises a second connector body and a top pushing portion, the second connector body is configured for being inserted into and connected with the first connector body, and the top pushing portion is connected with the second connector body, and configured to push the corresponding protective cover.

14. The connector assembly according to claim 13, wherein the top pushing portion is provided with a second fastening part, and the second fastening part is configured to cooperate with the first fastening part on the corresponding protective cover, so that the corresponding protective cover can be pushed by the second fastening part to slide in the insertion direction of the second connector.

15. A connector assembly according to claim 13 or 14, wherein number of the top pushing portions is two, and the two top pushing portions are provided spacedly and configured for pushing the two protective covers.

16. An electric device, comprising:
an electric device body;
a battery, configured to supply power to the electric device body; and
a connector assembly according to any one of claims 12-15, wherein the first connector is provided on one of the electric device body and the battery, and the at least one second connector is provided on the other of the electric device body and the battery.
